# EUROPÄISCHE PATENTANMELDUNG

(11) **EP 4 786 798 A1**
(43) Veröffentlichungstag der Anmeldung: **05.08.2026**
(21) Anmeldenummer: 25155694.0
(22) Anmeldetag: 04.02.2025
(51) Int. Cl.: F15B 7/00, F15B 11/20, F15B 13/07, F03C 1/40, F16H 61/444, B02C 18/24, F04C 14/02, F15B 13/00, F15B 13/04

(54) **HYDRAULIKSYSTEME MIT DIREKTMONTAGE VON UMSCHALTVENTIL AN HYDROSTATISCHER MASCHINE MIT GESCHLOSSENEM KREISLAUF**

(71) Anmelder: Lindner, Manuel, 9800 Spittal/Drau (AT)
(72) Erfinder: Lindner, Manuel, 9800 Spittal/Drau (AT); Leitner, Christian, 9815 Kolbnitz (AT)
(74) Vertreter: Grünecker Patent- und Rechtsanwälte PartG mbB

(57) **Zusammenfassung**

Ein Hydrauliksystem mit geschlossenem Hydraulikkreislauf, aufweisend ein Umschaltventil (2) und eine hydrostatische Maschine (1), wobei das Hydrauliksystem zwei oder mehr Verbraucher versorgt und wobei das Hydrauliksystem eingerichtet ist zur Umschaltung zwischen den zwei oder mehr Verbrauchern.

## Beschreibung

### Technisches Gebiet

Die vorliegende Erfindung bezieht sich auf Hydrauliksysteme von mobilen und stationären Maschinen mit geschlossenem Hydraulikkreislauf.

### Hintergrund

Hydrauliksysteme in mobilen und stationären Maschinen, insbesondere Systeme mit geschlossenen Hydraulikkreisläufen, kommen beispielsweise in mobilen Schreddern, Baumaschinen, Forstmaschinen, Materialumschlagmaschinen und Sonderfahrzeugen zum Einsatz. Diese Maschinen nutzen häufig hydrostatische Antriebe zur Leistungsübertragung, bei denen insbesondere Axial- oder Radialkolben-Verstellpumpen und -motoren, daneben Zahnrad-, Orbital- und Flügelzellenpumpen bzw. -motoren im geschlossenen Kreislauf betrieben werden.

Merkmal von geschlossenen Hydraulikkreisläufen ist, dass das vom Verbraucher kommende Öl direkt zur hydrostatischen Maschine zurückfließt, dies bringt besonders in Anwendungsbereichen Vorteile, in denen die Last schiebt (z. B. Abwärtsfahrt bei Fahrantrieben) oder zieht (z. B. Seilwinden). In diesen Anwendungsbereichen wird ein Hydraulikmotor zur Pumpe, die sich ihrerseits auf dem Antriebsmotor (z. B. Dieselmotor) abstützt, d. h. man kann mit einem geschlossenen Kreislauf bremsen.

Axial- oder Radialkolben-Verstellpumpen und -motoren können zusammenfassend auch als Axial- oder Radialkolbeneinheiten bezeichnet werden.

In bestehenden Anwendungen werden z. B. 6/2-Wege-Umschaltventile verwendet, um den Öl- bzw. Fluidstrom einer hydrostatischen Maschine zwischen verschiedenen Verbrauchern umzuleiten. Dies ermöglicht die Nutzung einer einzigen Hydrostatischen Maschine für unterschiedliche Betriebsmodi, wie zum Antrieb von Zerkleinerungswellen oder Kettenlaufwerken in mobilen Schreddern. Typischerweise sind diese Umschaltventile separat von der Hydrostatischen Maschine montiert und über flexible Hochdruckleitungen verbunden. Diese Bauweise bringt jedoch mehrere Nachteile mit sich.

Die getrennte Anordnung von Hydrostatischer Maschine und Umschaltventil erfordert große Biegeradien der Hochdruckleitungen und schränkt die Servicezugänglichkeit ein, wodurch sich ein erhöhter Platzbedarf im ohnehin begrenzten Platzangebot der Maschinen ergibt.

Flexible Hochdruckleitungen sind ferner kostspielig in der Herstellung, Montage und Wartung. Zudem müssen sie aufgrund von Verschleiß und Sicherheitsanforderungen regelmäßig geprüft und ersetzt werden. Längere Leitungswege und zusätzliche Montageschnittstellen erhöhen weiterhin die Fluidreibung und das Risiko von Undichtigkeiten. Diese Probleme führen zu erhöhten Betriebskosten, einer eingeschränkten Verfügbarkeit der Maschinen, insbesondere wegen schlechterer Wartbarkeit und potenziellen Sicherheitsrisiken.

Die vorliegende Erfindung behandelt die oben genannten Herausforderungen durch eine verbesserte Konstruktion, die den Platzbedarf reduziert, die Effizienz steigert und die Betriebskosten senkt. Ziel ist es, eine kompakte, zuverlässige und kosteneffiziente Lösung zu schaffen, die die Vorteile bestehender Systeme beibehält und gleichzeitig die genannten Nachteile behebt.

Konkret sieht die Erfindung ein Hydrauliksystem mit Direktmontage eines Umschaltventils an die Hydrostatische Maschine im geschlossenen Kreis vor. Durch diese Konstruktion werden die beiden Komponenten direkt miteinander verbunden, wodurch der Bedarf an flexiblen Hochdruckleitungen entfällt. Die Verbindungskanäle verlaufen dabei so, dass die Verbraucherarbeitsanschlüsse von hydrostatischer Maschine und Umschaltventil ohne zusätzliche externe Verrohrung miteinander verbunden werden. Dadurch wird der Bauraum optimiert, Montagekosten werden gesenkt, und das Risiko von Leckagen und Energieverlusten wird deutlich reduziert.

### Zusammenfassung der Erfindung

Die Erfindung betrifft Hydrauliksysteme sowie Schredder aufweisend Hydrauliksysteme mit geschlossenem Hydraulikkreislauf mit wenigstens einer Hydrostatischen Maschine und einem Umschaltventil.

Die vorliegende Offenbarung stellt in einem ersten Aspekt ein Hydrauliksystem mit geschlossenem Hydraulikkreislauf zur Verfügung, aufweisend ein Umschaltventil und eine damit unmittelbar oder mittelbar fest verbundene hydrostatische Maschine, wobei das Hydrauliksystem zwei oder mehr Verbraucher versorgt und wobei das Hydrauliksystem eingerichtet ist zur Umschaltung zwischen den zwei oder mehr Verbrauchern.

Dies erspart vorteilhafterweise Hochdruckverbindungen für das Hydraulikfluid, die große Biegeradien aufweisen würden, und verkleinert den Platzbedarf der Apparatur. Durch wegfallende Leitungen verringert sich ferner das Risiko für Leckagen, die Wartbarkeit erhöht sich.

Nach einer Implementierung der Vorrichtung des ersten Aspekts kann die Vorrichtung so ausgestaltet sein, dass die Umschaltung aller Verbraucherarbeitsanschlüsse zwischen einzelnen Verbrauchern nur im Stillstand der Verbraucher erfolgt und wobei eine vollständige Umschaltung durch eine Schaltstellungsüberwachung abgesichert ist.

Im Rahmen der Ausgestaltung als passives Element wird die Sicherheit erhöht. Insbesondere im Rahmen des Einsatzes bei großen und schweren Maschinen, insbesondere industriellen mobilen oder stationären Schreddern, ist es von Bedeutung, dass nur ein Verbraucher betrieben wird.

Nach einer Implementierung der Vorrichtung des ersten Aspekts kann die Vorrichtung so ausgestaltet sein, dass das Hydrauliksystem einen Adapterblock zwischen der hydrostatischen Maschine und dem Umschaltventil aufweist, und wobei der Adapterblock umfasst:
Verbindungskanäle zur Fluidverbindung zwischen den Verbraucherarbeitsanschlüssen der hydrostatischen Maschine und des Umschaltventils,
mindestens eine Befestigungseinrichtung, die so ausgeführt ist, dass der Adapterblock spaltfrei an den Verbraucherarbeitsanschlüssen der hydrostatischen Maschine und des Umschaltventils montiert werden kann,
Dichtungsmittel, die zwischen den Flanschflächen des Adapterblocks und den Verbraucherarbeitsanschlüssen der hydrostatischen Maschine sowie des Umschaltventils angeordnet sind, um die Hydraulikverbindungen abzudichten.

Der Adapterblock dient dabei insbesondere dazu, nicht direkt aufeinanderpassende hydrostatische Maschinen und Umschaltventile zu verbinden, ohne dafür Hochdruckleitungen mit erhöhtem Platzbedarf und schlechterer Wartbarkeit verwenden zu müssen.

Nach einer Implementierung der Vorrichtung des ersten Aspekts kann die Vorrichtung so ausgestaltet sein, dass der Adapterblock einen ersten Adapterblock und einen zweiten Adapterblock aufweist, wobei der erste Adapterblock mit der hydrostatischen Maschine und der zweite Adapterblock mit dem Umschaltventil spaltfrei an den jeweiligen Verbraucherarbeitsanschlüssen der hydrostatischen Maschine und des Umschaltventils montiert werden kann und wobei der erste und zweite Adapteranschlüsse aufweisen, an denen der erste und zweite Adapteranschluss spaltfrei miteinander verbunden werden können.

Der zweiteilige Adapterblock erleichtert die Verbindung von hydrostatischer Maschine und Umschaltventil und kann dabei die Verbindungsmöglichkeiten der Komponenten standardisieren.

Nach einer Implementierung der Vorrichtung des ersten Aspekts kann die Vorrichtung so ausgestaltet sein, dass es sich beim Umschaltventil um ein 6/2-Wege-Umschaltventil, ein 6/3-Wege-Umschaltventil, zwei 3/2-Wege-Umschaltventile, zwei 4/3-Wege-Umschaltventile oder ein 8/3-Wege-Umschaltventil handelt.

Verschieden ausgestaltete Umschaltventile kommen in Betracht, denen gemein ist, dass sie, insbesondere aus Sicherheitsgründen, jeweils die vollständige Umschaltung auf einen Verbraucher gewährleisten können.

Die vorliegende Offenbarung stellt in einem zweiten Aspekt ein Hydrauliksystem mit einer Umschaltventil-Adapterblockkombination in einem gemeinsamen Gehäuse bereit, umfassend:
Verbindungskanäle zur Fluidverbindung zwischen den Verbraucherarbeitsanschlüssen der hydrostatischen Maschine und der Umschaltventil-Adapterblockkombination, und
mindestens eine Befestigungseinrichtung, die so ausgeführt ist, dass die Umschaltventil-Adapterblockkombination spaltfrei an den Verbraucherarbeitsanschlüssen der hydrostatischen Maschine montiert werden kann.

Die Kombination aus Adapter und Umschaltventil erspart dabei weitere lose Bestandteile und ermöglicht Komplettlösungen für die jeweiligen hydrostatischen Maschinen.

Nach einer Implementierung der Vorrichtung des ersten oder zweiten Aspekts kann die Vorrichtung so ausgestaltet sein, dass die Dichtungsmittel zumindest eines von Dichtringen, Schneidkanten, USIT- Ringe, Weichmetall und Flüssigdichtung aufweisen.

Vorteilhafte Dichtmittel verhindern dabei Leckagen und erhöhen die Betriebssicherheit.

Nach einer Implementierung der Vorrichtung des ersten oder zweiten Aspekts kann die Vorrichtung so ausgestaltet sein, dass Nuten für Dichtringe adapterblockseitig oder hydraulikpumpenseitig vorgesehen sind.

Nuten ermöglichen die einfachere und sicherere Montage von Dichtringen.

Nach einer Implementierung der Vorrichtung des ersten oder zweiten Aspekts kann die Vorrichtung so ausgestaltet sein, dass Bohrungskanäle mit geschraubten, verschweißten oder eingepressten Blindstopfen verschlossen sind.

Um einen sicheren Betrieb zu gewährleisten werden nicht benötigte Anschlüsse geeignet verschlossen.

Nach einer Implementierung der Vorrichtung des ersten oder zweiten Aspekts kann die Vorrichtung so ausgestaltet sein, dass die Befestigungseinrichtung zumindest eines von Flanschen, Hohlschrauben, Stehbolzen oder Klemmen aufweist.

Die Befestigungseinrichtung wird vorteilhaft durch sichere und ggf. reversible Befestigungsmittel gewährleistet, die ein möglichst breites Anwendungsgebiet haben. Nach einer Implementierung der Vorrichtung des ersten oder zweiten Aspekts kann die Vorrichtung so ausgestaltet sein, dass sich der Adapterblock oder das Hydrauliksystem über mehrere hydrostatische Maschinen erstreckt.

Es können auch mehrere hydrostatische Maschinen kombiniert werden, so dass sich ein flexiblerer Aufbau ergibt.

Nach einer Implementierung der Vorrichtung des ersten oder zweiten Aspekts kann die Vorrichtung so ausgestaltet sein, dass eine Umschaltventil-Adapterblock-hydrostatische-Maschine-Kombination in einem gemeinsamen Gehäuse vorgesehen ist.

Auch mit dem Adapterblock kann das gesamte Hydrauliksystem in einem einzelnen Gehäuse zusammengefasst werden, wie schon bei der Kombination aus hydrostatischer Maschine und Umschaltventil, mit den Vorteilen, dass weitere lose Teile eingespart werden.

Nach einer Implementierung der Vorrichtung des ersten oder zweiten Aspekts kann die Vorrichtung so ausgestaltet sein, dass das Umschaltventil als Schieberventil, Sitzventil oder als Kugelschieber ausgeführt ist.

Schieberventile, Sitzventile und Kugelschieber sind dabei als vorteilhafte Ausgestaltung besonders zuverlässig.

Die vorliegende Offenbarung stellt in einem dritten Aspekt einen Schredder bereit, aufweisend ein Hydrauliksystem nach dem ersten oder zweiten Aspekt.

Das Hydrauliksystem stellt dabei insbesondere den sicheren und zuverlässigen Betrieb großer Maschinen mit mehr als einem Verbraucher sicher, auch indem es die Wartbarkeit erhöht.

Nach einer Implementierung der Vorrichtung des dritten Aspekts kann die Vorrichtung so ausgestaltet sein, dass es sich um einen mobilen Schredder handelt und wobei die Verbraucher wenigstens einen Antrieb von Zerkleinerungswellen und einen Antrieb von Kettenlaufwerken aufweisen.

Im Speziellen ist diese Sicherheitserhöhung besonders vorteilhaft bei mobilen Schreddern, da diese sowohl einen Antrieb von Zerkleinerungswellen und einen Fortbewegungsantrieb aufweisen, der nicht gleichzeitig betrieben werden soll und dessen sichere und eindeutige Umschaltung gewährleistet werden soll.

### Zeichnungen

Im Folgenden wird dabei die Erfindung unter Bezugnahme auf die bereitgestellten Zeichnungen beispielhaft ausführlich erläutert, wobei die graphischen Darstellungen im Einzelnen das Folgende bezeichnen:
Fig. 1: Darstellung eines Hydrauliksystems mit Adapterblock zwischen hydrostatischer Maschine (unten) und Umschaltventil (oben)
Fig. 2: Querschnitt zu Fig. 1 mit Darstellung der Verbindungskanäle
Fig. 3: Isometrische Schnittdarstellung des Adapterblocks
Fig. 4: Adapterblock von unten sowie im Querschnitt
Fig. 5: Hydrauliksystem mit zweiteiligem Adapterblock
Fig. 6: Hydrauliksystem mit Schrauben als Befestigungseinrichtung und Durchgangsbohrungen im Umschaltventil
Fig. 7: Hydrauliksystem mit Umschaltventil-Adapterblockkombination

### Detaillierte Beschreibung

In der Beschreibung der Ausführungsformen dieser Anmeldung beschreibt "und/oder" eine Assoziationsbeziehung zwischen verbundenen Objekten und weist darauf hin, dass drei Beziehungen bestehen können. Zum Beispiel kann "A und/oder B" die folgenden drei Fälle bedeuten: NurA existiert, sowohl A als auch B existieren, und nur B existiert. In dieser Anmeldung bedeutet "mindestens eines" eins oder mehrere, und "mehrere" bedeutet zwei oder mehr. Darüber hinaus sollte verstanden werden, dass in der Beschreibung dieser Anmeldung Begriffe wie "erste", "zweite" und "dritte" lediglich zur Unterscheidung und Beschreibung verwendet werden. Diese Begriffe sollten weder als Hinweis auf relative Wichtigkeit noch als Hinweis auf eine bestimmte Reihenfolge interpretiert werden.

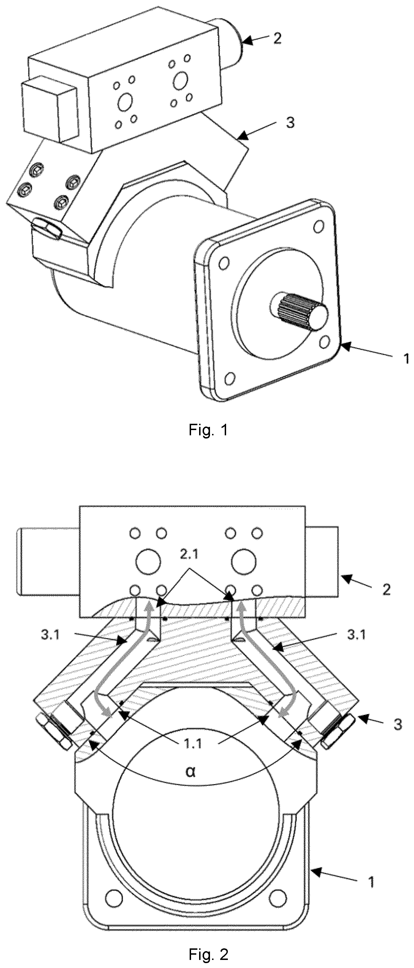

Die Erfindung betrifft ein Hydrauliksystem mit einer hydrostatischen Maschine 1 und einem Umschaltventil 2 sowie optional einem Adapterblock 3. Das Hydrauliksystem sowie Teile desselben sind in Fig. 1 bis 4 dargestellt ist. Der Adapterblock 3 dient der Direktmontage des Umschaltventils 2 an die Verbraucherarbeitsanschlüsse 1.1 der hydrostatischen Maschine 1 mit geschlossenem Hydraulikkreislauf.

Hydrostatische Maschinen 1 sind fluidtechnische Arbeitsmaschinen, die zur Wandlung von mechanischer Energie in hydraulische Energie oder umgekehrt genutzt werden. Sie arbeiten nach dem Verdrängerprinzip und erzeugen oder nutzen einen Volumenstrom an Hydraulikflüssigkeit, um mechanische Leistung zu übertragen. Dabei weisen sie zwei Hauptkategorien auf. Zum einen Hydraulikpumpen, die mechanische Antriebsleistung aufnehmen und in einen unter Druck stehenden Hydraulikstrom umwandeln. Zum anderen, Hydraulikmotoren, die durch anliegende Hydraulikflüssigkeit in Rotation oder lineare Bewegung versetzt werden und so mechanische Leistung abgeben.

Im Rahmen der vorliegenden Offenbarung können als hydrostatische Maschinen 1 vorzugsweise Axialkolben- oder Radialkolbeneinheiten eingesetzt werden. Diese sind sowohl als Hydraulikpumpe als auch als Hydraulikmotor einsetzbar. Axialkolbeneinheiten umfassen Maschinen, bei denen die Kolben in Achsrichtung einer Antriebs- oder Abtriebswelle angeordnet sind. Radialkolbeneinheiten sind Verdrängerpumpen oder - motoren, bei denen die Kolben radial zur Antriebswelle angeordnet sind.

Ein Adapterblock 3 kann eingesetzt werden, wenn die Verbraucherarbeitsanschlüsse bzw. Befestigungspunkte zwischen Umschaltventil 2 und hydrostatischer Maschine 1 in Ausrichtung und/oder Winkel nicht spaltfrei aufliegen bzw. fluchten.

In Fig. 1 wird ein Hydrauliksystem gezeigt, das aus einer hydrostatischen Maschine 1, einem Adapterblock 3 und einem darauf montierten Umschaltventil 2 besteht. Die hydrostatische Maschine 1 befindet sich am unteren Ende der Darstellung und ist mit dem Adapterblock 3 verbunden. Dieser Adapterblock 3 stellt die Verbindung zwischen den Verbraucherarbeitsanschlüssen der hydrostatischen Maschine 1 und den Verbraucherarbeitsanschlüssen des Umschaltventils 2.1 her. Das Umschaltventil 2 sitzt direkt auf dem Adapterblock 3, wodurch die Anordnung kompakt gehalten wird.

Die Schraubverbindungen zwischen den einzelnen Komponenten sowie die kompakte Bauweise ermöglichen eine spaltfreie Montage, die Energieverluste minimiert und den Bauraum reduziert. Die Montageposition des Adapterblocks 3 ist so gewählt, dass eine optimale Zugänglichkeit für Wartung und Inspektion gewährleistet ist.

Fig. 2 zeigt den Querschnitt der Anordnung aus Figur 1, um die internen Details und die Funktionalität der Komponenten zu veranschaulichen. Im Querschnitt sind die Verbindungskanäle 3.1, 3.2 innerhalb des Adapterblocks 3 deutlich erkennbar. Diese Kanäle verlaufen von den Verbraucherarbeitsanschlüssen der hydrostatischen Maschine 1.1 zu den Verbraucherarbeitsanschlüssen des Umschaltventils 2.1.

Der Adapterblock 3 ist so konstruiert, dass die Kanäle im Inneren druckverlustarm verlaufen und die Geometrie der Verbraucherarbeitsanschlüsse berücksichtigt wird. Der Winkel α, der die relative Position der Verbraucherarbeitsanschlüsse beschreibt, sorgt dafür, dass die Bauteile mechanisch kompatibel sind. Die Dichtungsmittel 6, die zwischen den Flanschflächen der Komponenten angeordnet sind, verhindern effektiv Leckagen und gewährleisten die Betriebssicherheit des Systems.

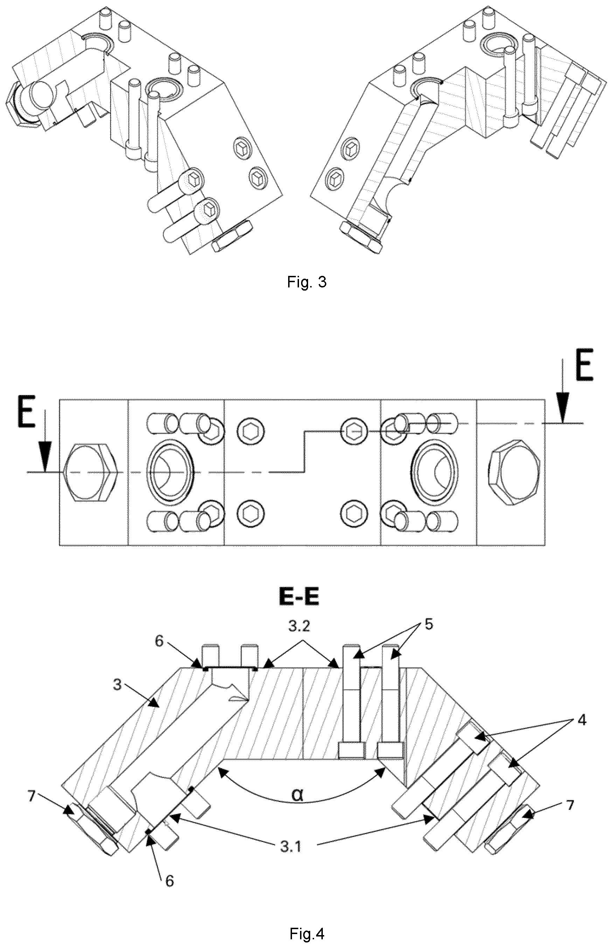

In Fig. 3 wird ein beispielhafter Adapterblock 3 in einer isometrischen Schnittdarstellung gezeigt. Es sind die Bohrungen für die Schraubverbindungen und die Verbindungskanäle 3.1, 3.2 erkennbar, die die Verbraucherarbeitsanschlüsse der hydrostatischen Maschine 1.1 und des Umschaltventils 2.1 verbinden. Die Schnittdarstellung zeigt, wie die Verbindungskanäle 3.1, 3.2 durch den Adapterblock 3 geführt werden, um eine optimale Fluidübertragung zu gewährleisten. Außerdem sind die Kontaktflächen für die spaltfreie Montage gut sichtbar. Diese Kontaktflächen verfügen über Dichtungsnuten 3.2, in denen die Dichtungsmittel 6 eingebracht werden, um eine sichere Abdichtung zu gewährleisten.

Fig. 4 zeigt einen beispielhaften Adapterblock 3 3 in einer Ansicht von unten sowie im Querschnitt entlang der Linie E-E. In der unteren Ansicht sind die Montagemöglichkeiten durch Schraubverbindungen 4, 5 und die genaue Anordnung der Anschlüsse ersichtlich.

Im Querschnitt werden die internen Verbindungskanäle 3.1, 3.2 sowie die Dichtungsnuten 3.2 für die O-Ringe oder andere Dichtungsmittel 6 hervorgehoben. Zusätzlich sind Blindstopfen 7 erkennbar, die nicht benötigte Öffnungen verschließen und somit Leckagen oder unnötige Druckverluste verhindern. Der Winkel α zwischen den Verbraucherarbeitsanschlüssen der hydrostatischen Maschine 1.1 und des Umschaltventils 2.1 wird deutlich, was die konstruktive Anpassung des Adapterblocks 3 an die jeweiligen Anforderungen zeigt.

Ein Hydrauliksystem kann aus einer Kombination aus Umschaltventil 2 und hydrostatischer Maschine 1 vorgesehen sein, wobei Umschaltventil 2 und hydrostatische Maschine 1 mittelbar oder unmittelbar fest miteinander verbunden können, wobei ein geschlossener Hydraulikkreis vorliegt wobei das Hydrauliksystem zwei oder mehr Verbraucher versorgt und wobei das Hydrauliksystem eingerichtet ist zur Umschaltung zwischen den zwei oder mehr Verbrauchern. Eine feste Verbindung wird dabei hierin als eine starre Verbindungangesehen, insbesondere ohne Hochdruckleitungen mit großen Biegeradien angesehen.

Die Verbindung kann dabei durch das Vorliegen eines gemeinsamen Blocks oder beliebige Befestigungseinrichtungen erfolgen, insbesondere Flansche (z. B. genormte Flansche nach ISO 6164/SAE 518, DIN 3901/3902, Quadratflansch ISO 6164) für den Hochdruckbereich. Insbesondere diese Verbindungsmöglichkeiten werden hierin als unmittelbare Verbindung angesehen.

Die Umschaltung zwischen den Verbrauchern erfolgt dabei optional, aber bevorzugt nur im Stillstand der Verbraucher. Eine vollständige Umschaltung ist vorzugsweise durch eine Schaltstellungsüberwachung abgesichert ist.

Die Schaltstellungsüberwachung kann dabei insbesondere durch Induktiv- oder weiteren Lage- und Positionssensoren eingerichtet sein, um so den Betrieb in Maschinen mit besonderen Sicherheitsanforderungen zu erleichtern, insbesondere Schreddern.

Das Hydrauliksystem weist optional zwischen der hydrostatischen Maschine 1 und dem Umschaltventil 2 einen Adapterblock 3 auf. Insbesondere diese Verbindungsmöglichkeit wird hierin als mittelbare Verbindung angesehen. Dieser Adapterblock 3 ist im Einzelnen mit folgenden Merkmalen ausgestaltet.

Wie in Fig. 2, Fig. 3 und Fig. 4 zu sehen, verlaufen die Verbindungskanäle bzw. Bohrungen 3.1, 3.2 innerhalb des Adapterblocks 3 und ermöglichen die direkte Fluidverbindung zwischen den Verbraucherarbeitsanschlüssen 1.1 der hydrostatischen Maschine 1 und den Verbraucherarbeitsanschlüssen 2.1 des Umschaltventils 2. Die Kanäle sind so gestaltet, dass sie den Flanschgeometrien der Verbraucherarbeitsanschlüsse entsprechen und spaltfrei aufliegen, wodurch Druckverluste minimiert werden.

Die Fig. 3, 4 zeigen speziell den Aufbau des Adapterblocks 3 am in Schnittdarstellung. Die Verbraucherarbeitsanschlüsse der hydrostatischen Maschine 1.1 bzw. der Umschaltventile 2.1 sind dabei als Flansche (z. B. genormte Flansche nach ISO 6164/SAE 518, DIN 3901/3902, Quadratflansch ISO 6164) für den Hochdruckbereich ausgeführt, dessen Flächen je nach Hersteller/Type auf einer Ebene oder einen Winkel α zueinander aufweisen können (in der Fig. 3 z. B. unter 90°).

Die Flansche verfügen in der Darstellung, aber sonst nicht notwendig jeweils über 4 Gewindebohrungen, welche hier zur Befestigung des Adapterblocks 3 mittels Schrauben 4,5 dienen. Dabei sind die Kontaktflächen des Adapterblocks 3.1, 3.2 so ausgeführt, dass diese mit den Flanschflächen der Verbraucherarbeitsanschlüsse von hydrostatischen Maschine 1.1 und Umschaltventils 2.1 in Ausrichtung und Winkel übereinstimmen und spaltfrei aufliegen.

Nicht für das Fluid oder die Befestigung benötigte Bohrungen werden, wie erwähnt, mit Blindstopfen 7 geschraubt bzw. eingepresst verschlossen oder dienen optional auch zur Aufnahme von Sensor, -Ventil- oder weitern Anschlüssen (z. B. Hydraulikleitungen).

Der Adapterblock 3 verfügt über mindestens eine Befestigungseinrichtung, beispielsweise in Form der bereits erwähnten Schrauben 4, 5, die direkt durch das Umschaltventil 2 oder den Adapterblock 3 geführt werden, wobei jedes dieser beiden Bestandteile Gewindebohrungen und/oder Durchführungen aufweisen kann. Optional einsetzbar sind auch eine hier nicht abschließend benannte Vielzahl an anderen Befestigungsmechanismen wie 4-Loch Flansche, Hohlschrauben, Stehbolzen oder Klemmen. Wie in Fig. 4 dargestellt, greifen diese Schrauben 4, 5 in die Gewindebohrungen der hydrostatischen Maschine 1 oder des Adapterblocks 3, um eine sichere und spaltfreie Verbindung zu gewährleisten.

Zwischen den Flanschflächen der hydrostatischen Maschine 1.1 und des Umschaltventils 2.1 sowie den zugehörigen Kontaktflächen des Adapterblocks 3 sind Dichtungsmittel 6 wie z.B. O-Ringe oder USIT-Ringe angeordnet, um eine zuverlässige Abdichtung der Hydraulikverbindungen zu gewährleisten. Die entsprechenden Nuten für die Dichtungsmittel 6 sind optional in den Kontaktflächen des Adapterblocks 3 integriert, können aber auch auf Seiten der hydrostatischen Maschine 1 oder des Umschaltventils 2 angeordnet sein.

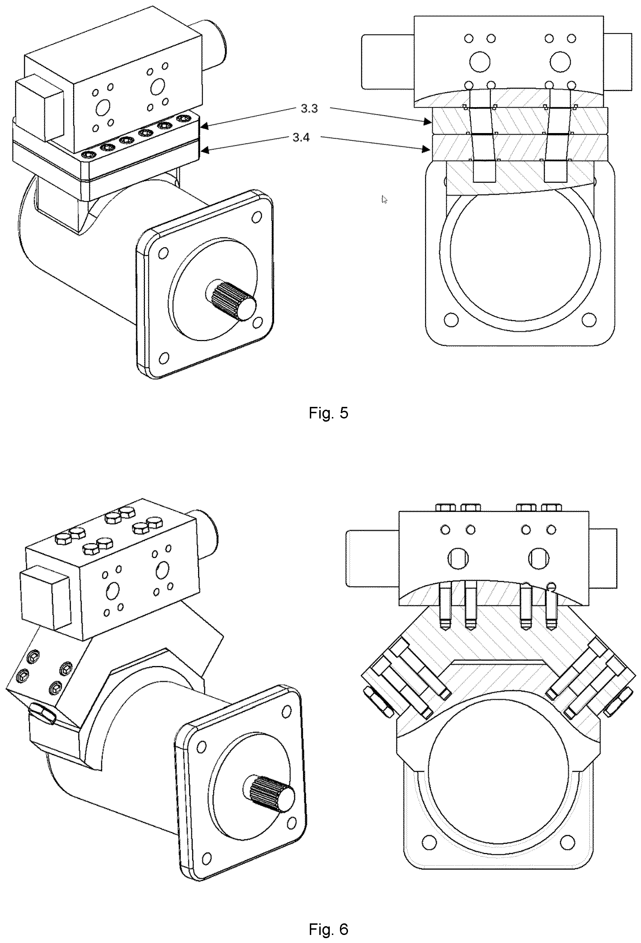

Wie in Fig. 5 gezeigt besteht der Adapterblock 3 optional aus zwei separaten Teilen: einem ersten/unteren Adapterblock 3.4, der an den Verbraucherarbeitsanschlüssen der hydrostatischen Maschine 1 montiert wird, und einem zweiten/oberen Adapterblock 3.3, der an den Verbraucherarbeitsanschlüssen des Umschaltventils 2 verbunden ist. Diese beiden Teile verfügen jeweils über Flansche, die eine spaltfreie Verbindung der beiden Adapterblockkomponenten ermöglichen. Über Schrauben können die beiden Adapterblöcke 3.3 und 3.4 anschließend miteinander verbunden werden.

Der Vorteil dieser Bauweise liegt in der Flexibilität der Montage sowie der Möglichkeit, unterschiedliche Flanschgeometrien der hydrostatischen Maschine 1 und des Umschaltventils 2 zu berücksichtigen.

Das Umschaltventil 2 kann gemäß den Anforderungen der Anwendung in verschiedenen Ausführungen vorliegen, insbesondere aber nicht ausschließlich als 6/2-Wege-Umschaltventil, Zwei 3/2-Wege-Umschaltventile, ein 6/3-Wege-Umschaltventil, oder 8/3-Wege -Umschaltventil oder zwei 4/3-Wege-Umschaltventilen. Diese Varianten ermöglichen den Wechsel zwischen mehreren Verbrauchern im geschlossenen Hydraulikkreislauf und erhöhen die Flexibilität des Systems. Die Umschaltung erfolgt mechanisch, hydraulisch oder elektrisch.

Das 6/2-Wege-Umschaltventil ist ein Ventiltyp, der über sechs Anschlüsse und zwei Schaltstellungen verfügt. Es wird typischerweise eingesetzt, um den Hydraulikölstrom zwischen zwei Verbrauchern umzuschalten, die nicht gleichzeitig betrieben werden müssen. In einem geschlossenen Hydraulikkreislauf übernimmt dieses Ventil folgende Funktionen: Das 6/2-Wege-Ventil leitet den Hochdruckstrom der hydrostatischen Maschine 1 entweder zu einem ersten Verbraucher (z. B. Antriebsmotoren einer Zerkleinerungswelle) oder zu einem zweiten Verbraucher (z. B. Fahrmotoren eines Kettenfahrwerks). Gleichzeitig wird der Rückstrom des jeweiligen Verbrauchers in den Kreislauf zurückgeführt. Bei der Ausführung als 6/3-Wege-Umschaltventil wird zusätzlich im unbetätigten Zustand eine Mittelstellung eingenommen.

Zwei 3/2-Wege-Ventile können als Alternative zu einem einzigen 6/2-Wege-Ventil verwendet werden. Jedes 3/2-Wege-Ventil verfügt über drei Anschlüsse und zwei Schaltstellungen.

Das 8/3-Wege -Umschaltventil ist ein Ventiltyp mit acht Anschlüssen und drei Schaltstellungen. Es wird eingesetzt, wenn mehr als zwei Verbraucher im geschlossenen Hydraulikkreislauf betrieben werden sollen. Im Gegensatz zum 6/2-Wege-Ventil ermöglicht das 8/3-Wege-Ventil den Wechsel zwischen mehreren Verbrauchern, indem es den Ölstrom selektiv zu einem von drei möglichen Verbrauchern leitet. Jeder Verbraucher kann dabei im geschlossenen Kreislauf mit Druck- und Rückstrom versorgt werden. Das 8/3-Wege-Ventil ermöglicht den Betrieb von bis zu drei Verbrauchern mit nur einem Ventil.

Zwei 4/3-Wege-Ventile können als Alternative zu einem einzigen 8/3-Wege-Ventil verwendet werden. Jedes 4/3-Wege-Ventil verfügt über vier Anschlüsse und drei Schaltstellungen.

Dabei können die Umschaltventile als hydraulische Weiche dienen, die den Fluidstrom der Verbraucherarbeitsanschlüsse auf den jeweiligen Verbraucher umleiten. Die Umschaltventile erfüllen dabei in ihrer Grundausführung während des laufenden Betriebes (z. B. in einem Schredder- oder Fahrbetrieb) keine weiteren Regel- oder Steuerfunktionen, die Umschaltung erfolgt vorzugsweise im Stillstand der Maschine. Im laufenden Betrieb sind alle Verbraucherarbeitsanschlüsse der hydrostatischen Maschine mit allen Verbraucherarbeitsanschlüssen des gewählten Verbrauchers verbunden.

Verbraucherarbeitsanschlüsse im Sinne dieser Offenbarung sind die hydraulischen Anschlüsse eines Verbrauchers oder einer hydrostatischen Maschine, über die Arbeitsflüssigkeit, insbesondere Hydrauliköl, aktiv zugeführt oder abgeführt wird, um mechanische Arbeit zu verrichten. Sie umfassen alle druckführenden Fluidkanäle bzw. Leitungen, die für den bestimmungsgemäßen Betrieb des Verbrauchers oder der hydrostatischen Maschine erforderlich sind, und können je nach Bauart auch zusätzliche Steuer- oder Leckölanschlüsse beinhalten.

Eine Schaltstellungsüberwachung in Form von Induktiv- oder weiteren Lage- und Positionssensoren kann dabei optional die Schaltposition des Ventiles erfassen, um unkontrollierte Maschinenbewegungen und/oder Schäden an den Hydraulikkomponenten zu vermeiden.

Neben der reinen Umschaltfunktion kann das Hydrauliksystem zusätzlich mit Druckbegrenzungsventilen zur Absicherung von Verbrauchern und/oder Druckausgleichs-Verbindungen, die einen leckagebedingten Druckaufbau (und damit ungewollte Bewegung der Verbraucher) zwischen den inaktiven Verbraucherarbeitsanschlüssen verhindern, erweitert werden.

Die Befestigung zwischen Adapterblock 3, hydrostatischer Maschine 1 und Umschaltventil 2 kann auf verschiedene Weise erfolgen:
Fig. 6 zeigt optionale Befestigungseinrichtungen mit Schrauben 4, 5 in Durchgangsbohrungen im Umschaltventil 2 und Gewindebohrungen im Adapterblock 3 sowie Schrauben in Durchgangsbohrungen im Adapterblock 3 und Gewindebohrungen in der hydrostatischen Maschine 1.

Optional verfügen entweder das Umschaltventil 2 oder der Adapterblock 3 über Durchgangsbohrungen und das jeweils andere Bauteil über entsprechende Gewindebohrungen, um ein Verschrauben mit dem Adapterblock 3 aus Richtung des Umschaltventils 2 zu erlauben.

Alternativ verfügen das Umschaltventil 2 und der Adapterblock 3 über Durchgangsbohrungen, die so angeordnet sind, dass die Befestigungsschrauben durch das Umschaltventil 2 und den Adapterblock 3 direkt in Gewindebohrungen der hydrostatischen Maschine 1.1 greifen; genauso ist eine Verbindung von der hydrostatischen Maschine 1 aus über Durchgangsbohrungen in Gewindebohrung des Umschaltventils 2 möglich.

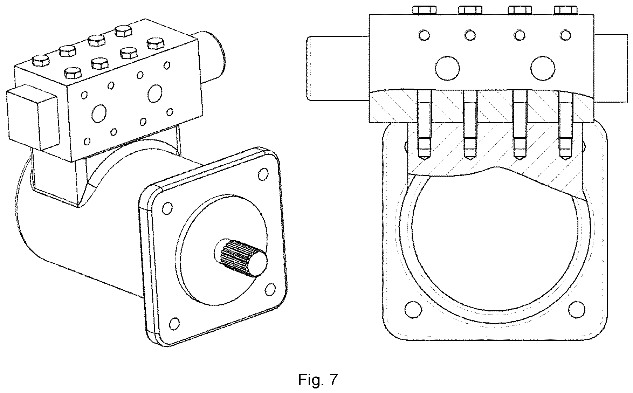

Mit Blick auf Fig. 7 wird ein hierin offenbartes Hydrauliksystem beschrieben, umfassend eine Kombination aus dem Adapterblock 3 und dem Umschaltventil 2. Dies erspart die gesonderte Montage des Umschaltventils 2 auf den Adapterblock 3. Dabei kann die Verbindung reversibel durch beschriebene Befestigungseinrichtungen oder irreversibel als einzelner Block ausgeführt sein.

Fig. 7 zeigt dabei ein Hydrauliksystem mit einer Umschaltventil-Adapterblockkombination, bei dem der Adapterblock 3 und das Umschaltventil 2 in einem gemeinsamen Gehäuse integriert und kombiniert sind, wobei wie beim Adapterblock 3 als Einzelblock Verbindungskanäle zur Fluidverbindung zwischen den Verbraucherarbeitsanschlüssen der hydrostatischen Maschine 1.1 und der Umschaltventil-Adapterblockkombination vorgesehen sind und mindestens eine Befestigungseinrichtung, die so ausgeführt ist, dass die Umschaltventil-Adapterblockkombination spaltfrei an den Verbraucherarbeitsanschlüssen der hydrostatischen Maschine 1.1 montiert werden kann. Die Verbindungskanäle 3.1, 3.2 sind hierbei direkt in das Gehäuse integriert. Diese Ausführung reduziert die Anzahl der Montageschnittstellen und bietet zusätzliche Vorteile hinsichtlich Bauraum und Dichtheit.

Dabei kann das Umschaltventil 2 gemäß den Anforderungen der Anwendung wie oben beschrieben in verschiedenen Ausführungen vorliegen, insbesondere als 6/2-Wege-Umschaltventil, Zwei 3/2-Wege-Umschaltventile, oder 8/3-Wege bzw. zwei 4/3 Wege-Umschaltventil.

Auch hier kann die Befestigung des Umschaltventiles 2 aus Richtung der hydrostatischen Maschine 1 erfolgen, ebenso wie vom Umschaltventil 2 aus, wobei bspw. die Umschaltventil-Adapterblockkombination Durchgangsbohrungen verfügt, die so angeordnet sind, dass die Befestigungsschrauben durch die Umschaltventil-Adapterblockkombination direkt in Gewindebohrungen der hydrostatischen Maschine 1.1 greifen oder die hydrostatische Maschine 1 über Durchgangsbohrungen verfügt, die so angeordnet sind, dass die Befestigungsschrauben durch die hydrostatische Maschine 1 direkt in Gewindebohrungen der Umschaltventil-Adapterblockkombination greifen.

Sowohl hinsichtlich des Hydrauliksystems allgemein wie auch des Hydrauliksystems enthaltend die Umschaltventil-Adapterblockkombination gilt, dass das Dichtungsmittel 6 zumindest eines von Dichtringen, Schneidkanten, USIT- Ringe, Weichmetall und Flüssigdichtung aufweisen kann. Die Abdichtung kann sowohl in axialer als auch radialer Richtung erfolgen, z. B. als kurze Hülsen mit radialen Dichtringen, die hydrostatische Maschine 1 und Umschaltventil 2 verbinden.

Dabei können Nuten für Dichtringe adapterblockseitig oder hydraulikpumpenseitig vorgesehen sein.

Bohrungskanäle können mit Blindstopfen 7 verschlossen sein. Diese Blindstopfen 7 können geschraubt, gepresst oder verschweißt sein, um nicht benötigte Bohrungen abzudichten oder für zukünftige Sensor, -Ventil- oder weiteren Anschlüssen (z. B. Hydraulikleitungen) freizugeben.

Befestigungseinrichtung können optional zumindest eines von 4-Loch Flanschen, Hohlschrauben, Stehbolzen, Klemmen oder andere Befestigungsmechanismen aufweisen um den Adapterblock 3 sicher und spaltfrei mit der hydrostatischen Maschine 1 und dem Umschaltventil 2 zu verbinden.

Der Adapterblock 3 oder das gesamte Hydrauliksystem können sich über mehrere hydrostatischen Maschinen 1 erstrecken und dabei bspw. mehrere Umschaltventile 2 und Verbraucher versorgen.

Das Umschaltventil 2 kann als Schieberventil oder Sitzventil oder in Drehschieberausführung gestaltet sein, um den spezifischen Anforderungen der Anwendung zu entsprechen.

Beim Sitzventil werden die Anschlüsse durch Aufsetzen oder Abheben eines abdichtenden Elements verbunden bzw. getrennt. Es zeichnet sich durch hohe Dichtheit und robuste Konstruktion aus. Dieses Ventil ist besonders geeignet für Anwendungen mit hohen Drücken und Volumenströmen, wie sie in geschlossenen Hydraulikkreisläufen auftreten.

Beim Schieberventil ist der Schieber das bewegliche Element des Ventils, das durch eine Betätigungskraft (z. B. hydraulisch, mechanisch oder elektrisch) entlang einer Achse bewegt wird. Die Bewegung des Schiebers bewirkt das Öffnen oder Schließen von Durchflusswegen.

Das Drehschieberventil unterscheidet sich vom Schieber- und/oder Sitzventil darin, dass es anstelle eines linear beweglichen Schiebers einen rotierenden Schieber (Drehkörper) verwendet. Dieses Ventil zeichnet sich durch eine sehr kompakte Bauweise und Unempfindlichkeit gegenüber Schmutz aus. Vorzugsweise kann es sich bei einem im Rahmen der hier beschriebenen Hydrauliksysteme um Drehschieberventile mit Kugelhähnen handeln, hier auch als Kugelschieber bezeichnet.

Eine Umsetzung des Hydrauliksystems als Umschaltventil-Adapterblock-hydrostatische-Maschine-Kombination in einem gemeinsamen Gehäuse reduziert die Anzahl der Bauteile und bietet Kompaktheit und Effizienz.

Explizit kann jedes vorausgehend beschriebene Hydrauliksystem in mobilen oder stationären Schreddern zum Einsatz kommen, daneben auch in Baumaschinen, Materialumschlagmaschinen, Forst- und Sonderfahrzeugen.

Dabei kann beispielsweise im Fall von mobilen Schreddern das Hydrauliksystem so ausgestaltet sein, dass es die Nutzung einer einzigen hydrostatischen Maschine für verschiedene Verbraucher erlaubt, z. B. ein Antrieb von Zerkleinerungswellen und daneben ein Antrieb von Kettenlaufwerken oder allgemein ein Antrieb zur Fortbewegung. Bei Forstmaschinen und Kränen kann dabei eine hydrostatische Maschine für Fahrantrieb und Windenantrieb als umschaltbaren Verbrauchern genutzt werden. Die Nutzungen durch verschiedene Verbraucher können als unterschiedliche Betriebsmodi angesehen werden.

Schredder sind insbesondere Zerkleinerungsmaschinen, die dazu dienen können, verschiedene Materialien wie Beton, Stahlbeton, Kunststoff, Holz, Metall, Papier oder gemischte Abfälle zu zerkleinern. Sie können eine Schneidkammer, die mit rotierenden Schneidwerkzeugen wie Messern, Hämmern oder Schneidwellen ausgestattet ist, ein Antriebssystem sowie Einlass- und Auslassvorrichtungen zur Materialzufuhr und -abgabe aufweisen. Die Schneidwerkzeuge, die z. B. aus gehärtetem Stahl oder anderen verschleißfesten Materialien bestehen, können in der Lage sein, das Material durch Schneiden, Reißen, Scheren, Drücken, Schlagen oder Reiben auf die gewünschte Größe zu reduzieren. Die Maschinen können dabei so ausgelegt sein, dass sie unterschiedliche Betriebsmodi wie die Zerkleinerung harter oder weicher Materialien unterstützen und sowohl für stationäre als auch mobile Anwendungen geeignet sind.

## Patentansprüche

1. Ein Hydrauliksystem mit geschlossenem Hydraulikkreislauf, aufweisend ein Umschaltventil (2) und eine damit unmittelbar oder mittelbar fest verbundene hydrostatische Maschine (1), wobei das Hydrauliksystem zwei oder mehr Verbraucher versorgt und wobei das Hydrauliksystem eingerichtet ist zur Umschaltung zwischen den zwei oder mehr Verbrauchern.

2. Das Hydrauliksystem nach Anspruch 1, wobei die Umschaltung aller Verbraucherarbeitsanschlüsse zwischen einzelnen Verbrauchern nur im Stillstand der Verbraucher erfolgt und wobei eine vollständige Umschaltung durch eine Schaltstellungsüberwachung abgesichert ist.

3. Ein Hydrauliksystem nach Anspruch 1 oder 2, wobei das Hydrauliksystem einen Adapterblock (3) zwischen der hydrostatischen Maschine (1) und dem Umschaltventil aufweist, und wobei der Adapterblock (3) umfasst:
Verbindungskanäle zur Fluidverbindung zwischen den Verbraucherarbeitsanschlüssen der hydrostatischen Maschine und des Umschaltventils (1.1, 2.1),
mindestens eine Befestigungseinrichtung, die so ausgeführt ist, dass der Adapterblock (3) spaltfrei an den Verbraucherarbeitsanschlüssen der hydrostatischen Maschine und des Umschaltventils (1.1, 2.1) montiert werden kann,
Dichtungsmittel (6), die zwischen den Flanschflächen des Adapterblocks (3.1, 3.2) und den Verbraucherarbeitsanschlüssen der hydrostatischen Maschine sowie des Umschaltventils (1.1, 2.1) angeordnet sind, um die Hydraulikverbindungen abzudichten.

4. Das Hydrauliksystem nach Anspruch 3, wobei der Adapterblock (3) einen ersten Adapterblock (3.4) und einen zweiten Adapterblock (3.3) aufweist, wobei der erste Adapterblock (3.4) mit der hydrostatischen Maschine (1) und der zweite Adapterblock (3.3) mit dem Umschaltventil (2) spaltfrei an den jeweiligen Verbraucherarbeitsanschlüssen der hydrostatischen Maschine und des Umschaltventils (1.1, 2.1) montiert werden kann und wobei der erste und zweite Adapteranschlüsse aufweisen, an denen der erste und zweite Adapteranschluss spaltfrei miteinander verbunden werden können.

5. Das Hydrauliksystem nach einem der Ansprüche 3 bis 4, wobei es sich beim Umschaltventil (2) um ein 6/2-Wege-Umschaltventil, ein 6/3-Wege-Umschaltventil, zwei 3/2-Wege-Umschaltventile, zwei 4/3-Wege-Umschaltventile oder ein 8/3-Wege-Umschaltventil handelt.

6. Ein Hydrauliksystem mit einer Umschaltventil-Adapterblockkombination in einem gemeinsamen Gehäuse, umfassend:
Verbindungskanäle zur Fluidverbindung zwischen den Verbraucherarbeitsanschlüssen der hydrostatischen Maschine (1.1) und der Umschaltventil-Adapterblockkombination, und
mindestens eine Befestigungseinrichtung, die so ausgeführt ist, dass die Umschaltventil-Adapterblockkombination spaltfrei an den Verbraucherarbeitsanschlüssen der hydrostatischen Maschine (1.1) montiert werden kann.

7. Das Hydrauliksystem nach einem der Ansprüche 3 bis 6, wobei die Dichtungsmittel (6) zumindest eines von Dichtringen, Schneidkanten, USIT- Ringe, Weichmetall und Flüssigdichtung aufweisen.

8. Das Hydrauliksystem nach Anspruch 7, wobei Nuten für Dichtringe adapterblockseitig oder hydraulikpumpenseitig vorgesehen sind.

9. Das Hydrauliksystem nach einem der Ansprüche 3 bis 8, wobei Bohrungskanäle mit geschraubten, verschweißten oder eingepressten Blindstopfen (7) verschlossen sind.

10. Das Hydrauliksystem nach einem der Ansprüche 3 bis 9, wobei die Befestigungseinrichtung zumindest eines von Flanschen, Hohlschrauben, Stehbolzen oder Klemmen aufweist.

11. Das Hydrauliksystem nach einem der Ansprüche 3 bis 10, wobei sich der Adapterblock (3) oder das Hydrauliksystem über mehrere hydrostatische Maschinen (1) erstreckt.

12. Das Hydrauliksystem nach einem der Ansprüche 3 bis 11, wobei eine Umschaltventil-Adapterblock-hydrostatische-Maschine-Kombination in einem gemeinsamen Gehäuse vorgesehen ist.

13. Das Hydrauliksystem nach einem der Ansprüche 1 bis 12, wobei das Umschaltventil (2) als Schieberventil, Sitzventil oder als Kugelschieber ausgeführt ist.

14. Ein Schredder, aufweisend ein Hydrauliksystem nach einem der Ansprüche 1 bis 13.

15. Der Schredder nach Anspruch 14, wobei es sich um einen mobilen Schredder handelt und wobei die Verbraucher wenigstens einen Antrieb von Zerkleinerungswellen und einen Antrieb von Kettenlaufwerken aufweisen.

## Geänderte Patentansprüche

### Geänderte Patentansprüche gemäss Regel 137(2) EPÜ.

1. Ein Hydrauliksystem mit geschlossenem Hydraulikkreislauf, aufweisend ein Umschaltventil (2) und eine damit unmittelbar oder mittelbar fest verbundene hydrostatische Maschine (1), wobei das Hydrauliksystem zwei oder mehr Verbraucher versorgt und wobei das Hydrauliksystem eingerichtet ist zur Umschaltung zwischen den zwei oder mehr Verbrauchern mittels des Umschaltventils (2), wobei die Umschaltung aller Verbraucherarbeitsanschlüsse zwischen einzelnen Verbrauchern nur im Stillstand der Verbraucher erfolgt und wobei eine vollständige Umschaltung durch eine Schaltstellungsüberwachung abgesichert ist.

2. Ein Hydrauliksystem nach Anspruch 1, wobei das Hydrauliksystem einen Adapterblock (3) zwischen der hydrostatischen Maschine (1) und dem Umschaltventil aufweist, und wobei der Adapterblock (3) umfasst:
Verbindungskanäle zur Fluidverbindung zwischen den Verbraucherarbeitsanschlüssen der hydrostatischen Maschine und des Umschaltventils (1.1, 2.1),
mindestens eine Befestigungseinrichtung, die so ausgeführt ist, dass der Adapterblock (3) spaltfrei an den Verbraucherarbeitsanschlüssen der hydrostatischen Maschine und des Umschaltventils (1.1, 2.1) montiert werden kann,
Dichtungsmittel (6), die zwischen den Flanschflächen des Adapterblocks (3.1, 3.2) und den Verbraucherarbeitsanschlüssen der hydrostatischen Maschine sowie des Umschaltventils (1.1, 2.1) angeordnet sind, um die Hydraulikverbindungen abzudichten.

3. Das Hydrauliksystem nach Anspruch 2, wobei der Adapterblock (3) einen ersten Adapterblock (3.4) und einen zweiten Adapterblock (3.3) aufweist, wobei der erste Adapterblock (3.4) mit der hydrostatischen Maschine (1) und der zweite Adapterblock (3.3) mit dem Umschaltventil (2) spaltfrei an den jeweiligen Verbraucherarbeitsanschlüssen der hydrostatischen Maschine und des Umschaltventils (1.1, 2.1) montiert werden kann und wobei der erste Adapterblock (3.4) und der zweite Adapterblock (3.3) Adapteranschlüsse aufweisen, an denen der erste und zweite Adapterblock spaltfrei miteinander verbunden werden können.

4. Das Hydrauliksystem nach Anspruch 2 oder 3, wobei es sich beim Umschaltventil (2) um ein 6/2-Wege-Umschaltventil, ein 6/3-Wege-Umschaltventil, zwei 3/2-Wege-Umschaltventile, zwei 4/3-Wege-Umschaltventile oder ein 8/3-Wege-Umschaltventil handelt.

5. Das Hydrauliksystem nach einem der Ansprüche 3 bis 4, wobei die Dichtungsmittel (6) zumindest eines von Dichtringen, Schneidkanten, USIT- Ringe, Weichmetall und Flüssigdichtung aufweisen.

6. Das Hydrauliksystem nach Anspruch 5, wobei Nuten für Dichtringe adapterblockseitig oder hydraulikpumpenseitig vorgesehen sind.

7. Das Hydrauliksystem nach einem der Ansprüche 3 bis 6, wobei Bohrungskanäle mit geschraubten, verschweißten oder eingepressten Blindstopfen (7) verschlossen sind.

8. Das Hydrauliksystem nach einem der Ansprüche 3 bis 7, wobei die Befestigungseinrichtung zumindest eines von Flanschen, Hohlschrauben, Stehbolzen oder Klemmen aufweist.

9. Das Hydrauliksystem nach einem der Ansprüche 3 bis 8, wobei sich der Adapterblock (3) oder das Hydrauliksystem über mehrere hydrostatische Maschinen (1) erstreckt.

10. Das Hydrauliksystem nach einem der Ansprüche 3 bis 9, wobei eine Umschaltventil-Adapterblock-hydrostatische-Maschine-Kombination in einem gemeinsamen Gehäuse vorgesehen ist.

11. Das Hydrauliksystem nach einem der Ansprüche 1 bis 10, wobei das Umschaltventil (2) als Schieberventil, Sitzventil oder als Kugelschieber ausgeführt ist.

12. Ein Schredder, aufweisend ein Hydrauliksystem nach einem der Ansprüche 1 bis 11.

13. Der Schredder nach Anspruch 12, wobei es sich um einen mobilen Schredder handelt und wobei die Verbraucher wenigstens einen Antrieb von Zerkleinerungswellen und einen Antrieb von Kettenlaufwerken aufweisen.
